# EUROPEAN PATENT APPLICATION

(11) **EP 3 187 837 A1**
(43) Date of publication of application: **05.07.2017**
(21) Application number: 16156710.2
(22) Date of filing: 22.02.2016
(51) Int. Cl.: G01F 23/64, G01F 23/72, G01F 23/00, E03B 1/00

(54) **WATER LEVEL SWITCH DEVICE AND WATER LEVEL DETECTION AND CONTROL METHOD**

(30) Priority: 28.12.2015 CN 201510995436
(71) Applicant: Shenzhen Yousun Technology Industrial Co., Ltd., Shenzhen Guangdong (CN)
(72) Inventor: ZHONG, Yiheng, Shenzhen Guangdong (CN)
(74) Representative: Hellmich, Wolfgang

(57) **Abstract**

The present invention relates to a water level switch device and a water level detection and control method. A water level switch device comprises a main control board, a water container, a water feeding pipe communicated with the water container, and a water feeding valve provided on the water feeding pipe, the water feeding valve being communicated with a water supply source, wherein a water level switch is further provided inside the water container; the water level switch is fixedly arranged inside the water container, and each of selectable water levels inside the water container corresponds to one of detection sites of the water level switch; the main control board comprises an MCU, a liquid crystal screen used for displaying a current water level parameter and a water level parameter setting page, and a control button used for setting a desired water level, and the control button, the liquid crystal screen, the water level switch and the water feeding valve are all connected to the MCU by signal lines.

## Description

### FIELD OF THE INVENTION

The present invention relates to the field of water level control and in particular to a water level switch device and a water level detection and control method.

### BACKGROUND OF THE INVENTION

At present, existing houshold or commericial kitchen equipment is lack of an automatic water level control function, and both the water feeding amount and the starting and stopping of water feeding are completely artificially controlled. Artificial control has the defect that waste of water resource is caused by feeding too much water in a case where the user walks away during the water feeding and forgets to close the water feeding valve.

### SUMMARY OF THE INVENTION

In view of the deficiency of the prior art, the present invention is to provide a water level switch device and a water level detection and control method, where a full-automatic water feeding control manner is used so that, after setting by a user, both the water feeding amount and the starting and stopping of water feeding are automatically controlled, so that the waste of water resource caused by feeding too much water is effectively avoided.

To achieve the above purpose, the present invention employs the following technical solutions.

A water level switch device is provided, including a main control board, a water container, a water feeding pipe communicated with the water container, and a water feeding valve provided on the water feeding pipe, the water feeding valve being communicated with a water supply source, wherein a water level switch is further provided inside the water container; the water level switch is fixedly arranged inside the water container, and each of selectable water levels inside the water container corresponds to one of detection sites of the water level switch; the main control board includes an MCU, a liquid crystal screen used for displaying a current water level parameter and a water level parameter setting page, and a control button used for setting a desired water level, and the control button, the liquid crystal screen, the water level switch and the water feeding valve are all connected to the MCU by signal lines.

Further, the number and position of the selectable water levels inside the water container are determined by actual requirements, and correspondingly, the number and position of the detection sites of the water level switch are customized according to the number and position of the selectable water levels inside the water container, for purpose of consistency.

Still further, he water level switch is a floating-ball-type water level switch including a shell; for each of the detection sites of the water level switch, at least two metal snap springs, a floating ball which is located between the two metal snap springs and has a magnet therein, and a reed switch located inside the shell are provided, the metal snap springs being fixedly sleeved on the shell while the floating ball being movably sleeved on the shell; in each of the detection sites, the metal snap spring located above the floating ball corresponds to the position of the reed switch in a corresponding detection site; each of the reed switches is electrically connected with a level line and controls the ON or OFF of the level line; and all the level lines are connected to the MCU by a terminal.

Preferably, an LED indicator is further provided on the main control board for indicating a currently selected water level.

A water level detection and control method by using the water level switch device as described above is provided, including the following steps:
S1: first, by a control button on a main control board, according to the demand of an actual amount of water consumption, a water level is selected among selectable water levels and then set, and at the end of setting, a water feeding valve is controlled by an MCU to open so that water enters a water container from a water feeding pipe; and
S2: since each of selectable water levels inside the water container corresponds to one of detection sites of the water level switch, when the actual water level inside the water container reaches a selectable water level, a corresponding detection site of the water level switch detects this event and sends a detection signal to the MCU; and when the water level reaches a water level specified in step S1, the MCU receives a corresponding signal and controls the water feeding valve to close; in this way, the accurate control of the water feeding amount is realized.

It is to be noted that, a water level detection process by the water level switch is as follows when the water level switch is a floating-ball-type water level switch: when there is no water in the water container, the floating ball in each of the detection sites comes into contact with the metal snap spring located below the floating ball for a purpose of bearing; when water feeding to the water container is started, after water reaches a floating ball in a detection site, the floating ball floats up as the water level rises and gradually approaches a reed switch in this detection site, and after the floating ball in this detection site reaches the reed switch in this detection site, the reed switch is closed due to the magnetism of the floating ball, a level line connected with this reed switch is turned on and sends a level signal to the MCU, and now the floating ball in this detection site does not float up any more due to the resistance of the metal snap spring above the floating ball; and when the level signal received by the MCU is sent by a level line in a detection site corresponding to the water level specified in step S1, the MCU sends a control signal to the water feeding valve to control the water feeding valve to close.

The present invention has the beneficial effects that, by a simple and effective method, the accurate control of the water feeding amount in the water container is realized, so that the water feeding amount may be set and controlled according to the demand of an actual amount of water consumption, and water saving is facilitated. The water level switch device and the water level detection and control method of the present invention may be widely applied to household kitchen water equipment and kitchen water equipment in the foot and drink industry.

### BRIEF DESCRIPTION OF THE DRAWINGS

Fig. 1 is a schematic connection diagram of a water level switch device according to an embodiment;
Fig. 2 is schematic diagram of IO network identity of a main control board of Fig. 1;
Fig. 3 is a structure diagram of the main control board of Fig. 1; and
Fig. 4 is a structure diagram of the water level switch of Fig. 1, when being a floating-ball-type water level switch.

### DETAILED DESCRIPTION OF THE PREFERRED EMBODIMENTS

The present invention will be further described with reference to the accompanying drawings. It is to be noted that, detailed implementations and specific operation processes are given in this embodiment on the premise of the technical solution, and the protection scope of the present invention is not limited to this embodiment.

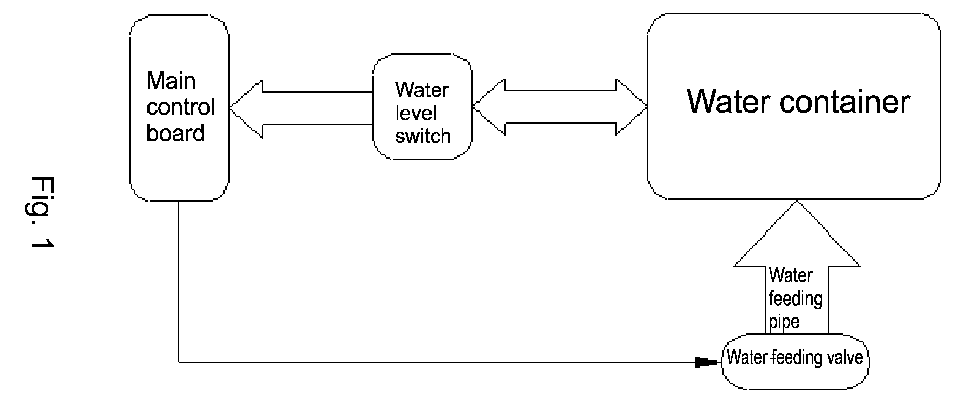

As shown in Fig. 1, a water level switch device is provided, including a main control board, a water container, a water feeding pipe communicated with the water container, and a water feeding valve provided on the water feeding pipe, the water feeding valve being communicated with a water supply source; a water level switch is further provided inside the water container; the water level switch is fixedly arranged inside the water container, and each of selectable water levels inside the water container corresponds to one of detection sites of the water level switch.

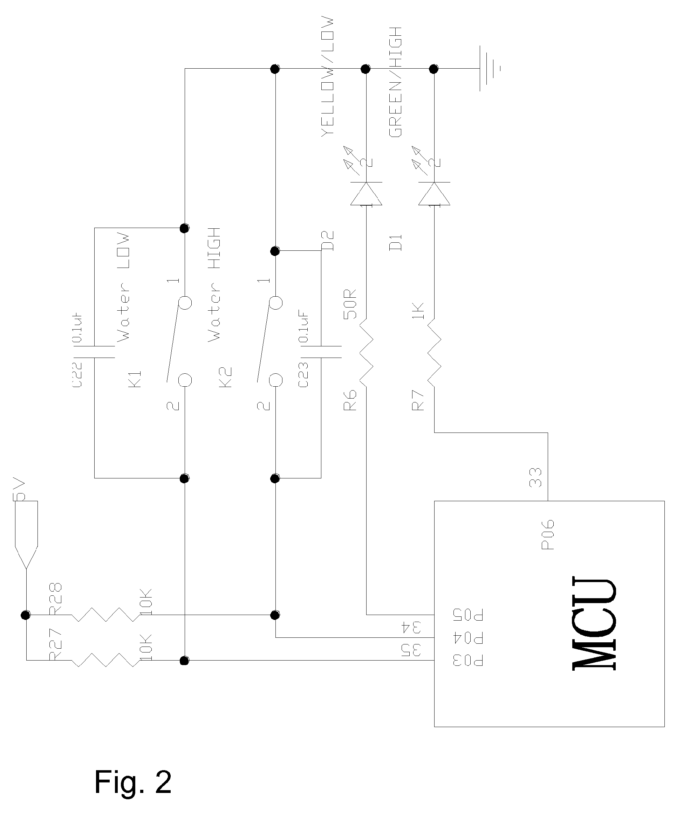

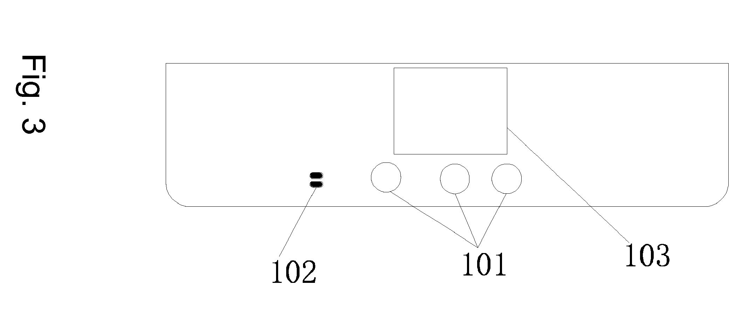

As shown in Fig. 2 and Fig. 3, the main control board includes an MCU, a liquid crystal screen 103 used for displaying a current water level parameter and a water level parameter setting page, and a control button 101 used for setting a desired water level. The control button, the liquid crystal screen, the water level switch and the water feeding valve are all connected to the MCU by signal lines.

Further, an LED indicator 102 is further provided on the main control board for indicating a currently selected water level.

Further, the number and position of the selectable water levels inside the water container are determined by actual requirements, and correspondingly, the number and position of the detection sites of the water level switch are customized according to the number and position of the selectable water levels inside the water container, for purpose of consistency.

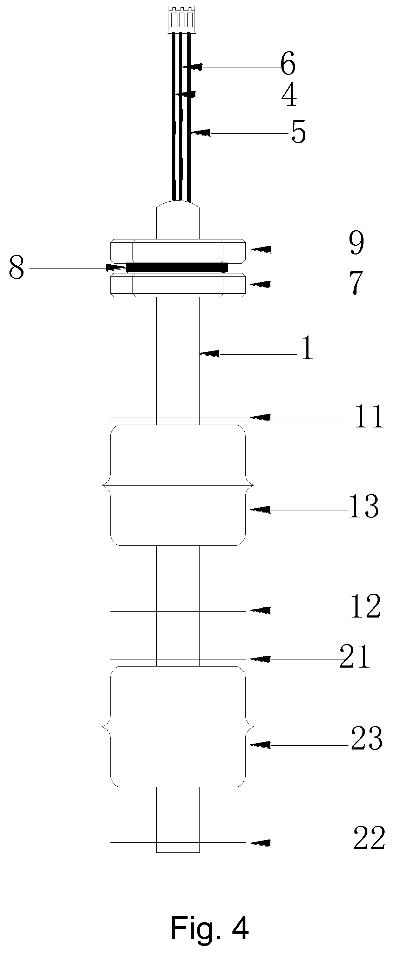

Still further, the water level switch is a floating-ball-type water level switch including a shell. As shown in Fig. 4, in this embodiment, floating-ball-type water level switches in a high detection site and a low detection site are included, and the floating-ball-type water level switch includes a shell 1; for each of the detection sites of the water level switch, at least two metal snap springs, a floating ball which is located between the two metal snap springs and has a magnet therein, and a reed switch located inside the shell are provided, the metal snap springs being fixedly sleeved on the shell while the floating ball being movably sleeved on the shell. In Fig. 4, for the high detection site, metal snap springs 11 and 12 and a floating ball 13 located between the metal snap springs 11 and 12 are provided; and for the low detection site, metal snap springs 21 and 22 and a floating ball 23 located between the metal snap springs 21 and 22 are provided. Reed switches (not shown) are provided at positions inside the shell 1 corresponding to the metal snap spring 11 and the metal snap spring 21, respectively. Each of the reed switches is electrically connected with a level line and controls the ON or OFF of the level line; and all the level lines are connected to the MCU by a terminal. In Fig. 4, the level line 4 is connected to the reed switch corresponding to the low detection site, the level line 5 is connected to the reed switch corresponding to the high detection site, and the level line 6 is a zero line.

A water level detection and control method by using the water level switch device as described above is provided, including the following steps:
S1: first, by a control button on a main control board, according to the demand of an actual amount of water consumption, a water level is selected among selectable water levels and then set, and at the end of setting, a water feeding valve is controlled by an MCU to open so that water enters a water container from a water feeding pipe; and
S2: since each of selectable water levels inside the water container corresponds to one of detection sites of the water level switch, when the actual water level inside the water container reaches a selectable water level, a corresponding detection site of the water level switch detects this event and sends a detection signal to the MCU; and when the water level reaches a water level specified in step S1, the MCU receives a corresponding signal and controls the water feeding valve to close; in this way, the accurate control of the water feeding amount is realized.

It is to be noted that, a water level detection process by the water level switch is as follows when the water level switch is a floating-ball-type water level switch: when there is no water in the water container, the floating ball in each of the detection sites comes into contact with the metal snap spring located below the floating ball for a purpose of bearing; when water feeding to the water container is started, after water reaches a floating ball in a detection site, the floating ball floats up as the water level rises and gradually approaches a reed switch in this detection site, and after the floating ball in this detection site reaches the reed switch in this detection site, the reed switch is closed due to the magnetism of the floating ball, a level line connected with this reed switch is turned on and sends a level signal to the MCU, and now the floating ball in this detection site does not float up any more due to the resistance of the metal snap spring above the floating ball; and when the level signal received by the MCU is sent by a level line in a detection site corresponding to the water level specified in step S1, the MCU sends a control signal to the water feeding valve to control the water feeding valve to close.

### Reference numbers

- 103: liquid crystal screen
- 101: control button
- 102: LED indicator
- 11: metal snap spring
- 12: metal snap spring
- 13: floating ball
- 21: metal snap spring
- 22: metal snap spring
- 23: floating ball
- 5: level line
- 6: level line

## Claims

1. A water level switch device, comprising a main control board, a water container, a water feeding pipe communicated with the water container, and a water feeding valve provided on the water feeding pipe, the water feeding valve being communicated with a water supply source, wherein a water level switch is further provided inside the water container; the water level switch is fixedly arranged inside the water container, and each of selectable water levels inside the water container corresponds to one of detection sites of the water level switch; the main control board comprises an MCU, a liquid crystal screen (103) used for displaying a current water level parameter and a water level parameter setting page, and a control button (101) used for setting a desired water level, and the control button (101), the liquid crystal screen (103), the water level switch and the water feeding valve are all connected to the MCU by signal lines.

2. The water level switch device according to claim 1, wherein the number and position of the selectable water levels inside the water container are determined by actual requirements, and correspondingly, the number and position of the detection sites of the water level switch are customized according to the number and position of the selectable water levels inside the water container, for purpose of consistency.

3. The water level switch device according to claim 1 or 2, wherein the water level switch is a floating-ball-type water level switch comprising a shell; for each of the detection sites of the water level switch, at least two metal snap springs (11, 12, 21 and 22), a floating ball (13, 23) which is located between the two metal snap springs (11, 12, 21 and 22) and has a magnet therein, and a reed switch located inside the shell are provided, the metal snap springs (11 and 12, 21 and 22) being fixedly sleeved on the shell while the floating ball (13, 23) being movably sleeved on the shell; in each of the detection sites, the metal snap spring located above the floating ball (13, 23) corresponds to the position of the reed switch in a corresponding detection site; each of the reed switches is electrically connected with a level line (5, 6) and controls the ON or OFF of the level line (5, 6); and all the level lines are connected to the MCU by a terminal.

4. The water level switch device according to one of claims 1 to 3, wherein an LED indicator (102) is further provided on the main control board for indicating a currently selected water level.

5. A water level detection and control method by using the water level switch device according to any one of the forgoing claims, comprising the following steps:
S1: first, by a control button (101) on a main control board, according to the demand of an actual amount of water consumption, a water level is selected among selectable water levels and then set, and at the end of setting, a water feeding valve is controlled by an MCU to open so that water enters a water container from a water feeding pipe; and
S2: since each of selectable water levels inside the water container corresponds to one of detection sites of the water level switch, when the actual water level inside the water container reaches a selectable water level, a corresponding detection site of the water level switch detects this event and sends a detection signal to the MCU; and when the water level reaches a water level specified in step S1, the MCU receives a corresponding signal and controls the water feeding valve to close; in this way, the accurate control of the water feeding amount is realized.

6. The water level detection and control method according to claim 5, wherein a water level detection process by the water level switch is as follows when the water level switch is a floating-ball-type water level switch: when there is no water in the water container, the floating ball (13, 23) in each of the detection sites comes into contact with the metal snap spring located below the floating ball (13, 23) for a purpose of bearing; when water feeding to the water container is started, after water reaches a floating ball (13, 23) in a detection site, the floating ball (13, 23) floats up as the water level rises and gradually approaches a reed switch in this detection site, and after the floating ball (13, 23) in this detection site reaches the reed switch in this detection site, the reed switch is closed due to the magnetism of the floating ball (13, 23), a level line (5, 6) connected with this reed switch is turned on and sends a level signal to the MCU, and now the floating ball (13, 23) in this detection site does not float up any more due to the resistance of the metal snap spring above the floating ball (13, 23); and when the level signal received by the MCU is sent by a level line (5, 6) in a detection site corresponding to the water level specified in step S1, the MCU sends a control signal to the water feeding valve to control the water feeding valve to close.
